# Europäisches Patentamt
# European Patent Office
# Office européen des brevets

(19)

(11) Numéro de publication: **0 032 346**
**B1**

(12)
# FASCICULE DE BREVET EUROPEEN

(45) Date de publication du fascicule du brevet: **20.03.85**

(51) Int. Cl.⁴: **F 16 K 17/04, F 16 K 47/00**

(21) Numéro de dépôt: **80401879.4**

(22) Date de dépôt: **29.12.80**

(54) **Soupape de sûreté équipée d'un frein hydraulique.**

(30) Priorité: **15.01.80 FR 8000842**

(43) Date de publication de la demande:
**22.07.81 Bulletin 81/29**

(45) Mention de la délivrance du brevet:
**20.03.85 Bulletin 85/12**

(84) Etats contractants désignés:
**DE GB IT SE**

(56) Documents cités:
**DE-A-1 800 524**
**DE-A-2 128 417**
**DE-B-1 254 925**
**FR-A-2 071 727**
**GB-A- 22 618**
**GB-A- 991 548**
**US-A-1 373 906**
**US-A-1 874 135**
**US-A-3 850 405**

(73) Titulaire: **ELECTRICITE DE FRANCE Service National**
**2, rue Louis Murat**
**F-75008 Paris (FR)**

(72) Inventeur: **Chabat-Courrede, Jean**
**31, rue du Docteur Emile Bergeron**
**F-77250 Moret Sur Loing (FR)**

(74) Mandataire: **Mongrédien, André et al**
**c/o BREVATOME 25, rue de Ponthieu**
**F-75008 Paris (FR)**

Courier Press, Leamington Spa, England.

EP 0 032 346 B1

## Description

La présente invention concerne une soupape de sûreté pour relâcher la pression de fluide à l'intérieur d'une enceinte, du type comprenant un raccord communiquant de façon étanche avec ladite enceinte et comportant un passage faisant communiquer un orifice d'entrée pourvu d'un siège de valve avec un orifice de sortie, un clapet monté dans ledit passage de façon à pouvoir se déplacer vers le siège de valve et en éloignement de celui-ci, un boîtier solidarisé du raccord par des moyens de fixation et dans lequel est logé un ressort taré prenant appui par une première extrémité sur ledit boîtier et par son extrémité opposée sur un organe de liaison sur lequel est fixé le clapet, et un frein hydraulique d'amortissement des oscillations du clapet comportant un cylindre et une cloison placée dans le cylindre et définissant avec celui-ci deux chambres à volume variable remplies de liquide et communiquant entre elles par au moins un passage calibré, l'une des pièces constituées par le cylindre et par la cloison étant solidaire de l'organe de liaison, alors que l'autre pièce est solidaire du boîtier et du raccord.

De façon connue, le fonctionnement d'une telle soupape est commandé par la pression régnant dans l'enceinte avec laquelle communique l'orifice d'entrée du raccord. Lorsque la pression dans l'enceinte est considérée comme normale, le clapet est maintenu en appui étanche contre le siège par le ressort taré. Lorsque la pression atteint la valeur déterminée par le tarage du ressort, le clapet se soulève de son siège et laisse passer le fluide contenu dans l'enceinte jusqu'à ce que la pression régnant dans l'enceinte revienne à nouveau inférieure à cette valeur limite. Lorsqu'il en est ainsi, le clapet revient en appui étanche contre le siège et ferme la soupape. Si la pression à l'intérieur de l'enceinte continue à augmenter, il se produit une nouvelle ouverture de la soupape, suivie d'une nouvelle fermeture. Ces changements d'états de la soupape peuvent se poursuivre et conduisent alors à un phénomène de battement du clapet.

Lorsque le fluide contenu dans l'enceinte est un fluide compressible, il se comporte comme un matelas et amortit les battements, de sorte que la fréquence de ces battements reste relativement faible et n'a pas de conséquence dommageable pour le matériel. En revanche, lorsque le fluide contenu dans l'enceinte est incompressible, les battements ne sont pas amortis, de sorte que leur fréquence devient très élevée. Il se produit alors des échauffements importants au niveau des zones de guidage de l'équipage mobile et notamment du clapet. Ces échauffements peuvent être suffisamment élevés pour provoquer des micro-soudures et entraîner un grippage de l'équipage mobile. Un tel grippage peut avoir pour conséquence de maintenir la soupape ouverte, et conduire à la vidange de l'enceinte, ce qui n'est évidemment pas souhaitable. De plus, dans certaines applications particulières, et notamment lorsque la soupape équipe le circuit d'eau d'une centrale nucléaire, la vidange accidentelle de ce circuit peut avoir des conséquences graves pour l'installation.

Par ailleurs, on a proposé dans le brevet US—A—1 874 135 d'adjoindre à un clapet pour compresseur un frein hydraulique en formant à l'intérieur même du clapet un cylindre rempli de liquide, dans lequel est reçu un piston fixe traversé par un passage calibré mettant en communication les deux chambres à volume variable définies dans le cylindre de part et d'autre du piston.

La structure décrite dans ce document présente toutefois l'inconvénient que le clapet est formé directement sur le cylindre du frein hydraulique et que le ressort de rappel du clapet prend directement appui sur la face supérieure du cylindre. Il en résulte que la transposition d'une telle structure à une soupape de sûreté contrôlant la pression d'un réservoir contenant un fluide à température élevée risque de conduire à une ébullition du liquide logé dans le cylindre du frein hydraulique et, par conséquent, de rendre ce dernier inefficace. De plus, cette structure n'est évidemment pas adaptable à des clapets existants, l'usure d'une pièce nécessitant le replacement de l'ensemble du clapet et un contrôle rigoureux et précis de chacun des éléments est pratiquement impossible.

La présente invention a pour objet une soupape de sûreté comportant un frein hydraulique comme le clapet décrit dans le brevet US—A—1 874 135, ce frein étant placé de telle sorte qu'il ne perde pas son efficacité lorsque la température s'élève, et aussi de façon à pouvoir être introduit aisément et de façon interchangeable dans une soupape de sûreté existante. Bien que la présence d'un frein hydraulique soit particulièrement avantageuse lorsque la soupape de sûreté doit être implantée sur une enceinte remplie d'un fluide incompressible, la soupape selon l'invention peut également être implantée sur une enceinte remplie de fluide compressible.

A cet effet, une soupape de sûreté du type défini précédemment est caractérisée conformément à l'invention en ce que l'organe de liaison est une tige réalisée en trois parties emboîtée les unes dans les autres, la première partie de la tige portant le clapet, la partie intermédiaire de la tige étant solidaire de la cloison, le ressort taré prenant appui par son extrémité opposée sur la troisième partie de la tige, ladite soupape comprenant ainsi un premier sous ensemble formé par le raccord, le clapet et la première partie de la tige, un deuxième sous ensemble formé par le cylindre, la cloison et la partie intermédiaire de la tige, et un troisième sous-ensemble formé par le boîtier, le ressort taré et la troisième partie de la tige, lesdits moyens de fixation bloquant le deuxième sous-ensemble de façon démontable entre le premier et le troisième sous-ensemble.

Grâces à ces caractéristiques, il est possible d'insérer un frein hydraulique dans une soupape de sûreté existante, de façon interchangeable et sans que le fonctionnement du frein ne puisse être affecté par la température du fluide contenu dans l'enceinte. De plus, lorsque la soupape équipe le circuit d'eau déminéralisée d'une centrale nucléaire, cette caractéristique permet à la fois d'éviter toute étanchéité coulissante sur la sortie de tige du clapet et d'éviter de placer le ressort taré en contact avec l'eau sous pression déminéralisée.

Selon une autre caractéristique de l'invention la partie intermédiaire de la tige fait saillie à travers les fonds du cylindre, ces derniers étant munis de joints d'étanchéité toriques qui coopèrent avec ladite partie intermédiaire.

Conformément à différents modes de réalisation possibles de l'invention, la cloison peut être constituées, soit par un piston coulissant à l'intérieur du cylindre, soit par une membrane souple dont la périphérie externe est fixée au cylindre.

Selon une première variante de réalisation de l'invention, le passage calibré est constitué par un conduit externe mettant en communication les deux chambres à volume variable.

Selon une deuxième variante de réalisation de l'invention, le passage calibré est constitué par un trou formé dans la cloison et débouchant dans les deux chambres.

Dans l'une ou l'autre de ces variantes, et conformément à une caractéristique secondaire de l'invention, les chambres à volume variable peuvent communiquer entre elles par au moins deux passages de sections différentes contrôlées par des clapets anti-retour montés en sens opposés. Cette caractéristique permet de maîtriser et de différencier les manoeuvres d'ouverture et de fermeture de la soupape, et cela quelle que soit la nature du fluide contenu dans l'enceinte.

Selon une troisième variante de réalisation de l'invention lorsque la cloison est constituée par un piston, le passage calibré est constitué par un jeu défini entre le bord périphérique externe du piston et le cylindre.

On décrira maintenant, à titre d'exemple non limitatif, différentes variantes de réalisation d'une soupape de sûreté réalisée conformément à l'invention en se référant aux dessins annexés dans lesquels:

— la figure 1 est une vue en coupe axiale d'une soupape de sûreté dans laquelle a été inséré conformément à l'invention un frein hydraulique supprimant complètement les oscillations de haute fréquence de l'équipage mobile de la soupape,

— la figure 2 est une vue en coupe schématique illustrant une variante de réalisation du frein hydraulique incorporé dans la soupape représentée sur la figure 1, et

— la figure 3 est une vue en coupe schématique illustrant une autre variante de réalisation du frein hydraulique incorporé dans la soupape de la figure 1.

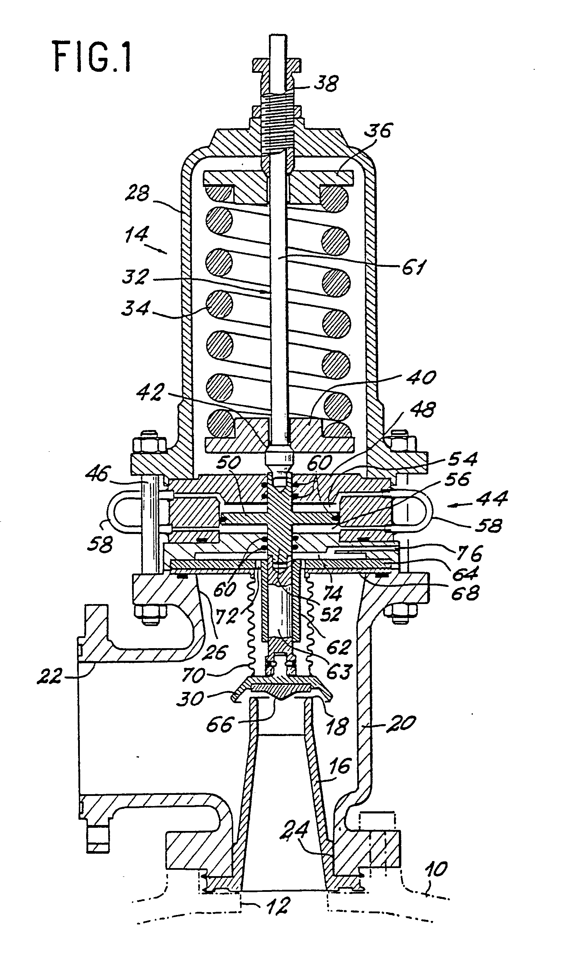

Sur la figure 1, on a représenté en traits mixtes une partie d'une enceinte 10 contenant un fluide dont la pression doit être maintenue en-dessous d'une valeur limite. L'enceinte 10 peut être constituée notamment par un réservoir dans lequel le fluide est à l'état statique ou par un circuit dans lequel le fluide circule. Ainsi, par exemple, l'enceinte 10 peut être constituée par un circuit d'eau d'une centrale nucléaire.

Afin d'empêcher toute augmentation de pression à l'intérieur de l'enceinte 10 au-dessus de la valeur limite, l'enceinte présente une ouverture circulaire 12 sur laquelle est montée une soupape de sûreté désignée de façon générale par la référence 14.

Plus précisément, une tubulure 16, définissant l'orifice d'entrée du raccord, est montée dans l'ouverture 12 et fait saillie vers l'extérieur de l'enceinte 10 de manière à définir à son extrémité libre un siège de valve 18. La tubulure 16 est disposée en totalité à l'intérieur d'un raccord en T 20 permettant d'évacuer par un circuit annexe (non représenté) raccordé à son orifice ou embouchure de sortie 22 le fluide qui s'échappe de l'enceinte par la tubulure d'entrée 16. Les deux autres embouchures 24 et 26 du raccord 20 sont raccordées respectivement de façon étanche à l'enceinte 10 et à une cloche 28 dont l'axe est confondu avec celui de l'ouverture 12, de telle sorte que tout le fluide qui s'échappe de l'enceinte par la tubulure 16 est évacué par l'embouchure 22 du raccord.

La soupape de sûreté 14 comprend un équipage mobile constitué par un clapet 30 et par une tige 32. Le clapet 30 est sollicité normalement en appui étanche contre le siège de valve 18 par un ressort hélicoïdal taré 34 disposé à l'intérieur de la cloche 28 entre un flasque 36 prenant appui sur une vis 38 vissée dans le fond de la cloche 28 et un flasque 40 prenant appui sur un épaulement 42 formé sur la tige 32. Le réglage du tarage du ressort 34 s'effectue au moyen de la vis 38.

Conformément à l'invention, un frein hydraulique désigné de façon générale par la référence 44 est disposé sur la tige 32, entre le clapet 30 et le ressort 34 et à proximité immédiate du clapet 30. Plus précisément, le frein hydraulique 44 est monté de façon étanche entre le raccord 20 et la cloche 28 au moyen de tirants 46. Il comprend un cylindre 48 à l'intérieur duquel coulisse un piston 50 solidaire d'une partie intermédiaire 52 de la tige 32. Le piston 50 définit à l'intérieur du cylindre 48 deux chambres 54 et 56 remplies d'un liquide de type organique, qui communiquent entre elles par des passages calibrés constitués dans la variante représentée sur la figure 1 par des conduits externes 58. Des joints toriques 60 assurent par ailleurs l'étanchéité entre la partie 52 de la tige et le cylindre 48 et entre le piston 50 et le cylindre.

Grâce au frein hydraulique 44, comme on le verra par la suite en étudiant le fonctionnement de la soupape de sûreté selon l'invention, les oscillations de haute fréquence de l'équipage mobile engendrées par une augmentation de la pression régnant à l'intérieur de l'enceinte lorsque le fluide qu'elle contient est incompressible sont totalement supprimées, de sorte que tout risque de grippage de cet équipage mobile se trouve éliminé. De plus, l'écoulement du fluide hors de l'enceinte est amélioré par rapport aux soupapes classiques, puis-qu'il varie uniformément et non plus de manière pulsatoire.

De préférence, la tige 32 comprend trois parties 61, 52 et 63 alignées qui s'emboîtent les unes dans les autres et sont respectivement guidées par la vis 38 pour la partie 61 qui porte l'épaulement 42 sur lequel vient prendre appui le ressort 34, par le cylindre 48 pour la partie 52 qui porte le piston 50 et par un dispositif de guidage 62 solidaire d'une plaque 64 fixée entre le cylindre 48 et le raccord 20 pour la partie 63 qui porte le clapet 30.

Comme le montre la figure 1, le clapet 30 est fixé à l'extrémité libre de la partie 63 de la tige 32 et porte une partie rapportée 66 qui vient appliquer de façon étanche le siège 18. Une seconde plaque 68 est pincée entre la plaque 64 et le raccord 20. Un soufflet d'étanchéité 70 est disposé autour de la partie 63 de la tige portant le clapet 30 et du dispositif de guidage 62 entre la plaque 68 et le clapet 30 auxquels il est raccordé de façon étanche. De préférence, le volume d'air emprisonné à l'intérieur du soufflet 70 est mis à l'air libre par des passages 72 ménagés dans la plaque 64, qui débouchent dans une chambre 74 formée dans le cylindre 48, cette chambre 74 communiquant avec l'extérieur par un passage 76. •

Le fonctionnement de la soupape de sûreté représentée sur la figure 1 est le suivant.

En l'absence de pression à l'intérieur de l'enceinte 10, ou lorsque la pression régnant à l'intérieur de cette enceinte est inférieure à la valeur limite déterminée par le ressort 34, ce dernier sollicite l'équipage mobile constitué par la tige 32 et par le clapet 30 vers le bas en considérant la figure, de telle sorte que la partie 66 du clapet vient en appui étanche contre le siège 18 formé sur la tubulure 16 communiquant avec l'enceinte.

Lorsque la pression régnant à l'intérieur de l'enceinte 10 s'élève et devient supérieure à la valeur limite déterminée par le ressort 34, le fluide contenu dans l'enceinte soulève le clapet 30 en éloignement du siège 18, de telle sorte qu'une partie du fluide s'échappe par l'embouchure 22 du raccord vers un circuit secondaire (non représenté). Cet échappement d'une certaine quantité de fluide a pour conséquence d'abaisser la pression à l'intérieur de l'enceinte, qui devient à nouveau inférieure à la valeur limite déterminée par le ressort. Ce dernier sollicite alors à nouveau l'équipage mobile vers le bas de telle sorte que le clapet 30 revient en appui étanche contre le siège 18. Si la pression à l'intérieur de l'enceinte continue à augmenter, elle devient à nouveau suffisante pour soulever le clapet en éloignement de son siège, ce qui conduit à un nouvel échappement de fluide et à une nouvelle fermeture de la soupape. En cas de montée continue de la pression dans l'enceinte 10, ce phénomène se reproduit indéfiniment et conduit à des battements du clapet.

Grâce au frein hydraulique 44 et quelle que soit la nature du fluide contenu dans l'enceinte 10, c'est-à-dire que ce fluide soit compressible ou incompressible, toutes oscillations de haute fréquence de l'équipage mobile de la soupape 14 se trouvent empêchées. En effet, les passages calibrés que constituent les conduits 58 entre les chambres 54 et 56 du frein hydraulique 44 permettent d'amortir les vibrations de l'équipage mobile provoquées par le phénomène de battement qui vient d'être mentionné. Il en résulte que les échauffements dus au frottement sont réduits et que tout risque de grippage est supprimé. De plus, par suite du mouvement amorti de l'équipage mobile, l'écoulement du fluide hors de l'enceinte 10 résultant du fonctionnement de la soupape de sûreté 14 est uniformément varié et non plus pulsatoire comme dans les soupapes de sûreté de la technique antérieure.

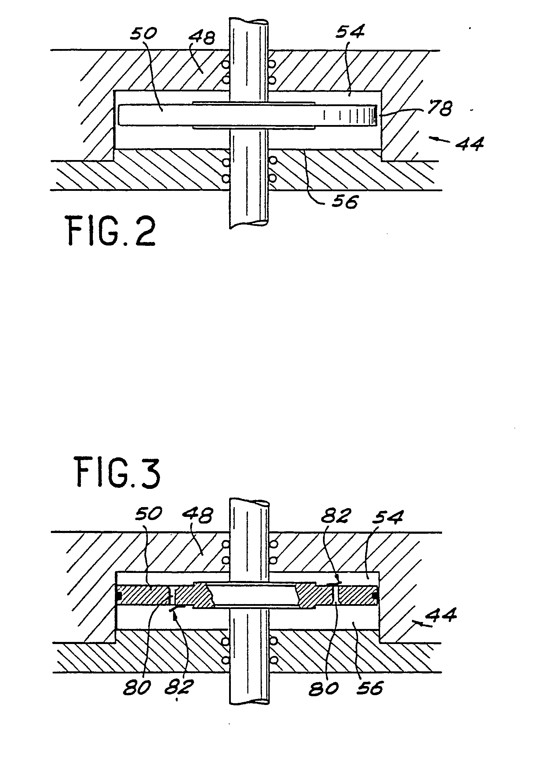

Dans la variante de réalisation représentée sur la figure 2, les conduits externes 58 par lesquels les chambres 54 et 56 communiquent entre elles sont supprimés et remplacés par un jeu 78 défini entre la périphérie externe du piston 50 et le cylindre 48. Comme les conduits 58 dans la variante de la figure 1, le jeu 78 définit un passage calibré par lequel les chambres 54 et 56 communiquent. La fonction d'amortissement remplie par le frein hydraulique 44 est donc également obtenue si l'on remplit les chambres 54 et 56 d'un liquide de type organique.

Dans la variante de réalisation représentée sur la figure 3, la communication entre les chambres 54 et 56 du frein hydraulique 44 s'effectue par l'intermédiaire de deux trous 80 formés dans le piston 50 et débouchant dans les deux chambres.

De plus, dans cette dernière variante, des clapets anti-retour représentés schématiquement en 82 contrôlent le passage du liquide dans chacun des trous 80, de telle sorte que l'un des clapets 82 obture l'un des trous 80 lorsque la tige 32 se déplace dans une première direction, tandis que l'autre clapet 82 obture l'autre trou 80 lorsque la tige 32 se déplace dans la direction opposée. Grâce à cette caractéristique, il est possible en calibrant différemment les trous 80 de réaliser un amortissement différent de l'équipage mobile de la soupape à l'ouverture et à la fermeture de celle-ci.

On remarquera que les différentes variantes de réalisation que viennent d'être décrites en se référant aux figures 1 à 3 peuvent être combinées. Ainsi, notamment dans la variante de réalisation de la figure 1, les conduits 58 pourraient également être équipés de clapets et être calibrés différemment afin de réaliser un amortissement différent de l'équipage mobile à l'ouverture et à la fermeture de la soupape. De plus, cette dernière caractéristique, qui permet de maîtriser et de différencier les manoeuvres d'ouverture et de fermeture de la soupape est indépendante de la nature du fluide contenu dans l'enceinte à contrôler et justifie l'utilisation d'une telle soupape de sûreté lorsque ce fluide est compressible.

Bien entendu, l'invention n'est pas limitée aux modes de réalisation qui viennent d'être décrits à titre d'exemple, mais en couvre toutes les variantes. Ainsi, le piston 50 utilisé dans les trois variantes décrites pourrait éventuellement être remplacé par une membrane métallique souple fixée à la fois à la tige 32 à sa partie centrale et au cylindre 48 à sa périphérie externe.

**Revendications**

1. Soupape de sûreté (14) pour relâcher la pression de fluide à l'intérieur d'une enceinte (10), du type comprenant un raccord (20) communiquant de façon étanche avec ladite enceinte et comportant un passage faisant communiquer un orifice d'entrée (16) pourvu d'un siège de valve (18) avec un orifice de sortie (22), un clapet (30) monté dans ledit passage de façon à pouvoir se déplacer vers le siège de valve et en éloignement de celui-ci, un boîtier (28) solidarisé du raccord (20) par des moyens de fixation (46) et dans lequel est logé un ressort taré (34) prenant appui par une première extrémité sur ledit boîtier et par son extrémité opposée sur un organe de liaison (32) sur lequel est fixé le clapet (30), et un frein hydraulique (44) d'amortissement des oscillations du clapet comportant un cylindre (48) et une cloison (50) placée dans le cylindre et définissant avec celui-ci deux chambres à volume variable (54, 56) remplies de liquide et communiquant entre elles par au moins un passage calibré (58, 78, 80), l'une (50) des pièces constituées par le cylindre et par le cloison étant solidaire du boîtier et du raccord, ladite soupape étant caractérisée en ce que l'organe de liaison est une tige (32) réalisé en trois parties (61, 52, 63) emboîtées les unes dans les autres, la première partie (63) de la tige portant le clapet (30), la partie intermédiaire (52) de la tige étant solidaire de la cloison (50), le ressort taré (34) prenant appui par son extrémité opposée sur la troisième partie (61) de la tige, ladite soupape comprenant ainsi un premier sous ensemble formé par le raccord (20), le clapet (30) et la première partie (63) de la tige, un deuxième sous-ensemble formé par le cylindre (48), la cloison (50) et la partie intermédiaire (52) de la tige, et un troisième sous-ensemble formé par le boîtier (28), le ressort taré (34) et la troisième partie (61) de la tige, lesdits moyens de fixation (46) bloquant le deuxième sous-ensemble de façon démontable entre le premier et le troisième sous-ensemble.

2. Soupape de sûreté selon la revendication 1, caractérisée en ce que la partie intermédiaire (52) de la tige fait saillie à travers les fonds du cylindre (48) ces derniers étant munis de joints d'étanchéité toriques (60) qui coopèrent avec ladite partie intermédiaire.

3. Soupape de sûreté selon l'une quelconque des revendications 1 et 2, caractérisée en ce que la cloison est constituée par un piston (50) coulissant à l'intérieur du cylindre (48).

4. Soupape de sûreté selon l'une quelconque des revendications 1 et 2, caractérisée en ce que la cloison (50) est constituée par une membrane souple dont la périphérie externe est fixée au cylindre (48).

5. Soupape de sûreté selon l'une quelconque des revendications précédentes, caractérisée en ce que le passage calibré est constitué par un conduit externe (58) mettant en communication les deux chambres à volume variable (54, 56).

6. Soupape de sûreté selon l'une quelconque des revendications 1 à 4, caractérisée en ce que le passage calibré est constitué par un trou (80) formé dans la cloison (50) et débouchant dans les deux chambres (54, 56).

7. Soupape de sûreté selon l'une quelconque des revendications 1 à 6, caractérisée en ce que les chambres à volume variable (54, 56) communiquent entre elles par au moins deux passages (80) de sections différentes contrôlés par des clapets anti-retour (82) montés en sens opposés.

8. Soupape de sûreté selon la revendication 3, caractérisée en ce que le passage calibré est constitué par un jeu (78) défini entre le bord périphérique externe du piston (50) et le cylindre (48).

**Patentansprüche**

1. Sicherheitsventil zum Ablassen von Druck eines in einem umschlossenen Raum (10) enthaltenen Fluids, mit einem unter Abdichtung mit dem umschlossenen Raum in Strömungsverbindung stehenden Anschlußteil (20) mit einem Durchlaß für die Strömungsverbindung zwischen einem mit einem Ventilsitz (18) versehenen Einlaßteil (16) und einem Auslaß (22), einem auf den Ventilsitz zu und von ihm weg bewegbar im Durchlaß angeordneten Absperrglied (30), einem mittels Befestigungseinrichtungen (46) fest mit dem Anschlußteil (20) verbundenen Gehäuse (28) und einen in diesem angeordneten, tarierten Feder (34), welche sich mit einem ersten Ende am Gehäuse und mit ihrem gegenüberliegenden Ende an einem Verbindungsglied (32) abstützt, an welchem das Absperrglied (30) befestigt ist, und mit einer hydraulischen Bremse (44) zum Dämpfen von Schwingungen des Absperrglieds, mit einem Zylinder (48) und einer in diesem angeordneten Sperrwand (50), welche zusammen mit diesem zwei ein variables Volumen aufweisende, mit einer Flüssigkeit gefüllte und über wenigstens einen kalibrierten Durchlaß (58, 78, 80) miteinander strömungsverbundene Kammern (54, 56) begrenzt, wobei eines (50) der durch den Zylinder und durch die Sperrwand dargestellten Teile fest mit dem Gehäuse und dem Anschlußteil verbunden und das Sicherheitsventil (14) dadurch gekennzeichnet ist, daß das Verbindungsglied eine aus drei ineinandergestreckten Teilen (61, 52, 63) zusammengesetzte Stange (32) ist, von denen das erste Teil (63) der Stange das Absperrglied (30) trägt, das mittlere Teil (52) der Stange fest mit der Sperrwand (50) verbunden ist und die tarierte Feder (34) sich mit ihrem gegenüberliegenden Ende am dritten Teil (61) der Stange abstützt, so daß das Ventil eine aus dem Anschlußteil (20), dem Absperrglied (30) und dem ersten Teil (63) der Stange gebildete erste Baugruppe, eine aus dem Zylinder (48), der Sperrwand (50) und dem mittleren Teil (52) der Stange gebildete zweite Baugruppe und eine aus dem Gehäuse (28), der tarierten Feder (34) und dem dritten Teil (61) der Stange gebildete dritte Baugruppe aufweist, von denen die zweite Baugruppe mittels der Befestigungseinrichtungen (46) lösbar zwischen der ersten und der dritten Baugruppe eingespannt ist.

2. Sicherheitsventil nach Anspruch 1, dadurch gekennzeichnet, daß das mittlere Teil (52) der Stange durch die Endwandungen des Zylinders (48) hervorsteht und daß diese mit Dichtungsringen (60) versehen sind, welche mit dem mittleren Teil zusammenwirken.

3. Sicherheitsventil nach Anspruch 1 und/oder 2, dadurch gekennzeichnet, daß die Sperrwand als ein im Inneren des Zylinders (48) verschieblicher Kolben (50) ausgebildet ist.

4. Sicherheitsventil nach Anspruch 1 und/oder 2, dadurch gekennzeichnet, daß die Sperrwand (50) als flexible Membrane ausgebildet ist, deren äußerer Umfang am Zylinder (48) befestigt ist.

5. Sicherheitsventil nach einem der vorstehenden Ansprüche, dadurch gekennzeichnet, daß der kalibrierte Durchlaß als eine äußere Leitung (58) ausgebildet ist, welche eine Strömungsverbindung zwischen den beiden ein variables Volumen aufweisenden Kammern (54, 56) herstellt.

6. Sicherheitsventil nach einem der Ansprüche 1 bis 4, dadurch gekennzeichnet, daß der kalibrierte Durchlaß als eine in der Sperrwand (50) geformte Bohrung (80) ausgebildet ist, welche in den beiden Kammern (54, 56) ausmündet.

7. Sicherheitsventil nach einem der Ansprüche 1 bis 6, dadurch gekennzeichnet, daß die ein variables Volumen aufweisenden Kammern (54, 56) über wenigstens zwei einen verschieden großen Querschnitt aufweisende Durchlässe (80) miteinander strömungsverbunden sind, welche durch in einander entgegengesetzten Richtungen montierte Rückschlagventil (82) gesteuert sind.

8. Sicherheitsventil nach Anspruch 3, dadurch gekennzeichnet, daß der kalibrierte Durchlaß durch ein zwischen dem äußeren Umfangsrand des Kolbens (50) und dem Zylinder (48) vorhandenes Spiel (78) gebildet ist.

## Claims

1. Safety valve (14) for fluid pressure-release from a pressure vessel (10), of the type comprising a junction member (20) in fluid-tight communication with said pressure vessel and having a passage providing communication with an inlet port (16) having a valve seat (18), and an outlet port (22), a valve member (30) mounted in said passage and displaceable towards and away from said valve seat, a casing (28) fastened to the junction member (20) by fixing means (46) and having therein a tared spring (34) whose first end bears against the casing and whose second end bears on a linking member (32), to which the valve member (30) is fixed, and a hydraulic brake (44) for damping oscillations of the valve member comprising a cylinder (48) and a partition (50) located in the cylinder and defining therein two spaces (54, 56) of variable volume filled with liquid and intercommunicating by at least one calibrated passage (58, 78, 80), one of the members (50) constituted by the cylinder and the partition being unitary with the casing and the junction member, said valve being characterized in that the linking member is a rod (32) formed of three parts (61, 52, 63) socketed within one another, the first part (63) of the rod carrying the valve member (30), the intermediate part (52) of the rod being unitary with the partition (50), the second end of the tared spring (34) bearing on the third part (61) of the rod, said valve thereby comprising a first sub-assembly formed by the junction member (20), the valve member (30) and the first part (63) of the rod, a second sub-assembly formed by the cylinder (48), the partition (50) and the intermediate part (52) of the rod, and a third sub-assembly formed by the casing (28) the tared spring (34) and the third part (61) of the rod, said fixing means (46) dismountably fastening the second sub-assembly between the first and third sub-assemblies.

2. Safety valve according to claim 1, characterized in that the intermediate part (52) of the rod projects beyond the end of the cylinder (48), said latter having sealing rings (60) cooperating with said intermediate part.

3. Safety valve according to either of claims 1 and 2, characterized in that the partition comprises a piston (50) sliding within the interior of the cylinder (48).

4. Safety valve according to either of claims 1 and 2, characterized in that the partition (50) comprises a flexible membrane whose rim is fixed to the cylinder (48).

5. Safety valve according to any one of the preceding claims, characterized in that the calibrated passage comprises an external conduit (58) providing communication between the two spaces (54, 56) of variable volume.

6. Safety valve according to any one of claims 1 to 4, characterized in that the calibrated passage comprises a bore (80) formed in the partition (50) and opening in the two spaces (54, 56).

7. Safety valve according to any one of claims 1 to 6, characterized in that the chambers (54, 56) of variable volume intercommunicate by at least two passages (80) having different cross sections and controlled by non-return valves (82) mounted in opposed senses.

8. Safety valve according to claim 3 characterized in that the calibrated passage comprises a predetermined clearance (78) between the circumferential surface of the piston (50) and the cylinder (48).

FIG.1

FIG.2

FIG.3